# EUROPEAN PATENT SPECIFICATION

(11) **EP 1 964 806 B1**
(45) Date of publication and mention of the grant of the patent: **07.11.2012**
(21) Application number: 08150821.0
(22) Date of filing: 30.01.2008
(51) Int. Cl.: B65G 63/04, B66C 1/46, B66C 19/00

(54) **Positioning system for container handling equipment**
Positionierungssystem für eine Vorrichtung zur Handhabung von Containern
Système de positionnement pour équipement de manipulation de récipient

(30) Priority: 02.03.2007 FI 20075151
(43) Date of publication of application: 03.09.2008
(73) Proprietor: Cargotec Finland Oy, 33101 Tampere (FI)
(72) Inventor: Parviainen, Keijo, 36110 Ruutana (FI)
(74) Representative: Papula Oy

(56) References cited:
- DE-A1- 4 005 538
- GB-A- 2 276 507
- JP-A- 11 240 609
- JP-A- 2003 252 448
- US-A- 5 780 826
- US-A1- 2004 189 031

## Description

The present invention concerns a positioning system for positioning a container handling equipment into a position determined by a crane handling and moving containers in a vehicle lane located under said crane, into which position the crane will lower the container/containers it has moved and/or from which position the crane will pick up the container/containers brought by the container handling equipment for further loading/storing elsewhere, which positioning system is a system based on the use of a radio frequency arranged by radio signals to constantly determine the position of the container handling equipment in relation to the crane.

The invention is thus related to the moving and transportation of freight with the aid of containers. Freight goods are conveniently transported in containers from the dispatcher/manufacturer of the goods directly to the buyer/recipient without any special steps in between. When transportation distances are long, the critical places of the transportation are located at spots where the way of transporting containers changes, such as in ports, where great quantities of containers must be unloaded, placed in intermediate storage and reloaded for another mode of transportation. The objective in ports is to achieve as short a loading/unloading time as possible, because it is expensive to have ships lying idle in ports and it is even more expensive if the loading/unloading is delayed for some reason causing the ship to be late in her route schedule. If a ship has to catch up a delay in her route, she must use a higher and more uneconomic cruising speed, whereby the fuel consumption and fuel costs will be higher than calculated. So loading and unloading of the vessel must take place as quickly as possible and without any additional delays and disturbances.

In ports a container crane is used for loading and unloading vessels. The crane lifts up containers from a trailer pulled by a vehicle and it moves the containers to the vessel and vice versa, that is, it moves containers from the vessel to the trailers.

The container cranes are big devices allowing several vehicles to be under the crane at the same time. Due to its large size the container crane can be moved only slowly and with difficulty during these work cycles. For this reason it is important that the vehicle and its trailer in particular are always in the correct place in relation to the container crane during loading. Container terminals have tried to solve the problem of vehicle/trailer positioning in relation to the crane in various ways, for example, as follows:

In the simplest solution the vehicle driver follows the crane movements with his eyes and tries at the last moment to move the vehicle to the right spot. When loading a vehicle/trailer this means that the vehicle and trailer are moved under the approaching crane and container/containers, and when unloading under the crane's s container gripping device. According to another simple manner, the crane operator has an assistant, who determines the right place for the approaching vehicle to stop under the crane and wait for the container gripping device or for the container/containers.

There are also solutions in use and on the market, where the crane is provided with equipment telling the vehicle driver the right place where to stop. These solutions are usually based on an optical outline recognition implemented, for example, with the aid of laser. Significant drawbacks of such solutions are the high price of the system and uncertain functioning especially when there are several vehicles at the same time under the container crane.

A an example of known solutions the US patent 7,123,132 can be presented, in which the described system for getting the vehicle to the right spot and position under the crane is based on the use of a three-dimensional laser camera in such a way that the camera scans the object and measures the distance between the camera or some fixed point and the object to be measured. This system has the same drawbacks as those described above. US patent 6,571,172 describes a system for determining the position of a gantry crane in relation to a container crane with the aid of a laser scanner. The advantages and drawbacks are the same as in the previous solution. US patent 5,142,658 describes a computer controlled system for assisting the vehicle driver in positioning his vehicle in the right position under the container crane for loading containers in the vehicle or unloading from it. The system is based on the use of a video camera located above the vehicle lanes under the crane for outline recognition and on indicator lights visible to the driver under the crane and helping the driver to move/stop his vehicle in the right place. This system, too, has the same drawbacks which were already described above.

Prior art positioning systems have also beem disclosed in documents DE 4005538, US 5,780,826 and JP 2003 252448. Document DE 4005538 shows an optical system which is based on the sending of a light beam which is reflected back to a receiver. The disadvantages of the optical systems of this kind have already been explained earlier. Document US 5,780826 discloses a self-propelled container handling apparatus the positioning system of which is basing on a DGPS (Differential Global Positioning System) and the use of a digital camera system. Digital camera system is necessary because the positioning is not accurate enough with DGPS only. Document JP 2003 252448 discloses an optical syatem in which the final location of the vehicle is determined by laser beam. The disadvantages of this kind of system are evident and they have already earlier been explained.

A prior art positioning system is disclosed in document WO 98/34127. The system described in this document comprises a navigation system based on a satellite positioning system, which navigation system includes a stationary GPS apparatus mounted in a stationary ground station and mobile GPS apparatuses mounted on the container handling machines moving in the nearby area. So this system comprises GPS satellites, a stationary GPS apparatus and mobile GPS apparatuses. This means that the system described in this document is a DGPS system (Differential Global Positioning System) by which the locations of the container handling machines are determined by measuring the distances simultaneously from at least four GPS satellites to the GPS apparatuses on the container handling machines and in the stationary ground station. Because the distances from each of the satellites to the ground is so huge the accuracy of the measurement of the distance is enhanced by use of a stationary ground station the location of which is precisely known. The exact location of the ground station is used as a correction factor in the determination or the distances from the GPS Satellites to the mobile GPS apparatuses.

Relating to prior art reference is further made to document US 2004/189031 A1 disclosing a spreader system of a container crane for lifting containers. This document is specifically directed to a spreader system without electric cables and it suggests a system in which the spreader is provided with a power source obtaining and generating energy from the rotation of the pulley sets of the spreader. So cables are no longer needed to transmit electric energy to the spreader, but command signals for execution of the operations must still be transmitted from the crane to the spreader. The command signals are transmitted through radio wave in the spreader system of US 2004/189031 A1. The spreader is provided with a transmitter transmitting data of the state of the spreader, i.e. position, extension/retraction of the spreader, state of the locking spindles etc. The transmitter of the spreader transmits said data to a receiver installed in the cabin of the crane. Also a PLC intelligent module is provided in the crane. PLC processes the data and converts it into command signals which are then transmitted back to the spreader. This document however does not say anything about the fact how the data of state of the spreader (position, etc) is obtained.

It is an objective of the present invention to bring about a new kind of positioning system for container handling equipment, which avoids the drawbacks relating to the state of the art and which achieves accurate and prompt positioning of the container handling equipment. In order to achieve this aim the invention is mainly characterized in that
a transmitter/receiver sending and receiving a radio signal is installed and a calculating unit is located in the container handling equipment said transmitter/receiver and calculating unit being connected to each other and
in communication with the transmitter/receiver in the container handling equipment at least two reflectors, which are arranged to receive and reflect back the radio signal transmitted by the transmitter/receiver of the container handling equipment, or at least two transmitter/receivers of a similar kind and operating at the same frequency as the transmitter/receiver of the container handling equipment which are arranged to receive the radio signal sent by the transmitter/receiver of the container handling equipment and correspondingly to send a radio signal to the transmitter/receiver of the container handling equipment are installed in the crane,
so that based on the transmitted/received radio signals the calculating unit constantly calculates the distances between the transmitter/receiver in the container handling equipment and the two reflectors or transmitters/receivers located in the crane and determines the location of the container handling equipment while it is moving and the exact place where to stop in relation to the crane for loading and/or unloading of containers.

In the positioning system according to the invention, the devices installed in the crane and in communication with the transmitter/receiver are preferably transmitter/receivers of the same kind and operating at the same frequency and arranged to receive the radio signal sent by the transmitter/receiver of the container handling equipment and correspondingly to send a radio signal to the transmitter/receiver of the container handling equipment. The most accurate and reliable position determination is achieved with this arrangement.

The positioning system of the container handling equipment further comprises a user interface of the positioning system connected to the calculating unit and installed in the container handling equipment and intended for use by the operator of the container handling equipment, which user interface indicates to the operator the exact place where to stop and the right direction in which to drive in order to achieve said exact place where to stop.

The container handling equipment may preferably be a combination formed by a vehicle and a trailer or other such chassis, whereby the calculating unit of the container handling equipment, the transmitter/receiver transmitting and receiving a radio signal and the user interface are installed in the vehicle of the combination. Trailers or other such chassis of different dimensions or types can be connected to the vehicle, whereby in order to calibrate the combination of vehicle and trailer or other chassis or to be put into use at each time each trailer or other such chassis is provided with identifying marks correspondingly, the calculating unit installed in the vehicle is provided with a wireless sensor for recognising at a close distance the trailer or other such chassis connected to the vehicle at each time.

The container handling equipment may also be a travelling container gantry crane, which is arranged to move containers under the crane for further transfer by the crane or to transport containers transferred by the crane away from under the crane.

The crane may be a container crane used in a port or other such place for handling loads or a gantry crane used at a container terminal or correspondingly in a container field.

Of the advantages of the invention in relation to the solutions known earlier the following may be presented. The system according to the invention is not based on the use of optics but on the use of a radio frequency, whereby the solution is considerably more reliable than an optical system. In an optical system any physical obstacle on the path of "the beam" will cut off "the beam", but there is no such problem in a system based on radio frequency. In addition to the reliability of operation, the implementation is quite advantageous as regards costs (for example, in comparison with optical systems). The solution speeds up loading and unloading considerably thus resulting in significant economic advantage. Other advantages and characteristic features of the invention will emerge hereinafter from the following detailed description of the invention, in which the invention is explained and illustrated with the aid of figures.

In the following, the invention is described in greater detail by referring to the figures in the appended drawing, in which:
Figure 1 is a schematic view of a container crane, which is used in a port and with which the positioning system for container handling equipment according to the invention can be applied.
Figure 2 is a schematic view of a gantry crane for use at a container terminal with which the positioning system for container handling equipment according to the invention can also be applied.
Figure 3 is a schematic perspective view of the structure of the container crane according to Figure 1 and of a vehicle-trailer combination transporting a container.
Figure 4 shows an application where the solution according to the invention is applied to a combination comprising a container crane and a travelling container gantry crane.
Figures 5A and 5B show vehicle-trailer combinations, where the positioning system for container handling equipment according to the invention can be applied.
Figure 6 is a schematic view of a user interface in the positioning system according to the invention installed in a vehicle.

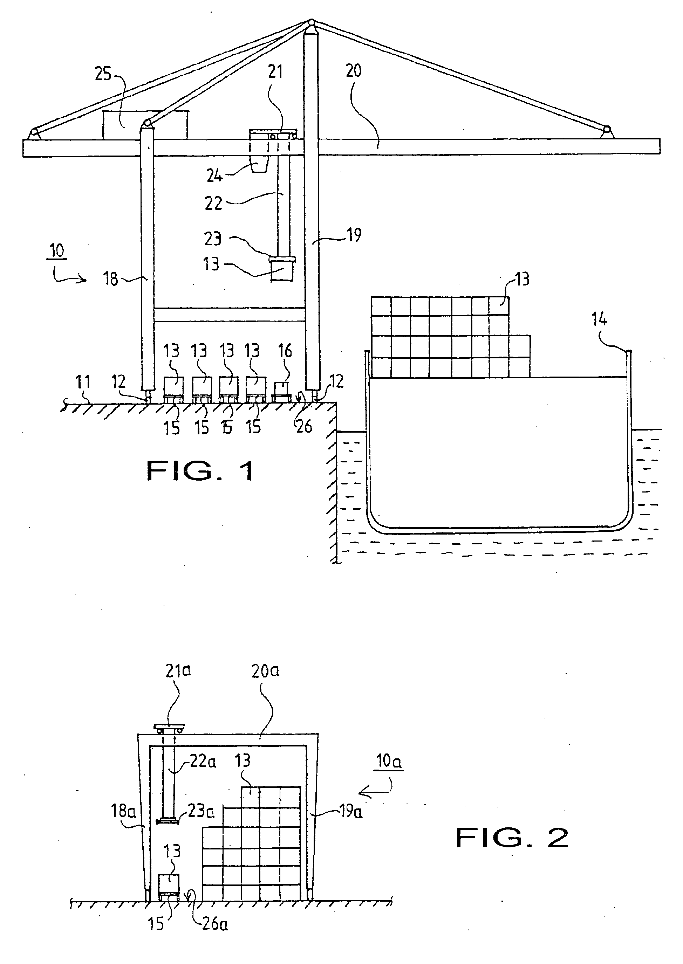

Figure 1 is a schematic view from one side of a container crane, which is shown by way of example and with which the positioning system for container handling equipment according to the invention can be applied. In Figure 1, the container crane is indicated by a general reference number 10 and it is of the so-called STS (Ship-to-Shore) crane type, which is arranged on a quay 11 to travel along rails 12. The container crane 10 is arranged to move containers 13 from a container vessel 14 on to chassis 15 or other such to a trailer 17 pulled by a vehicle 16 and vice versa during the loading and unloading of vessel 14. The container crane 10 is equipped with a vertical body comprising legs 18, 19 and supporting a horizontal beam 20, along which a lift bogie 21 is arranged to travel. Through lift ropes 22 the lift bogie 21 carries a container gripping device 23, which grips the container 13 from above. An operator's cab connected to the lift bogie 21 is indicated by reference number 24 and the crane's electric power aggregate is indicated by reference number 25. Under the crane there are vehicle lanes 26, along which the vehicle-trailer combinations drive under the crane in order to move containers 13 from the trailer to the container vessel 14 or the other way round. Thus it is very important for the trailer to be in the right position in relation to the container crane 10 during the loading and unloading.

Figure 2 is a schematic view of a gantry crane 10a, which is used at a container terminal and with which the positioning system for container handling equipment according to the invention can also be applied. The gantry crane 10a can be a Rail Mounted Gantry Crane (RMG) or as shown in Figure 2 a Rubber Tyred Gantry Crane (RTG). The gantry crane 10a is intended for moving containers 13 from chassis 15 or other such trailers pulled by vehicles and for piling the containers 13 into container rows and vice versa. The gantry crane 10a has a vertical body, which comprises legs 18a, 19a and which supports a horizontal bridge 20a, along which a lift bogie 21a is arranged to travel. The lift bogie 21a carries through lift ropes 22a a container gripping device 23a, which grips the container 13a from above. The container rows remain in between the gantry crane's 10a legs 18a, 19a, and between the legs there is also a vehicle lane 26a, along which the vehicle-trailer combinations drive under the crane in order to move containers 13 from the trailer into container rows or vice versa. Also in the case of the gantry crane 10a it is important for moving containers 13 that the container 13 to be moved from the chassis 15 or to the chassis is located in the right place in relation to the crane 10a and especially in relation to the container gripping device 23a in order to speed up container handling. Then there is no need to drive back and forth unnecessarily with the crane itself.

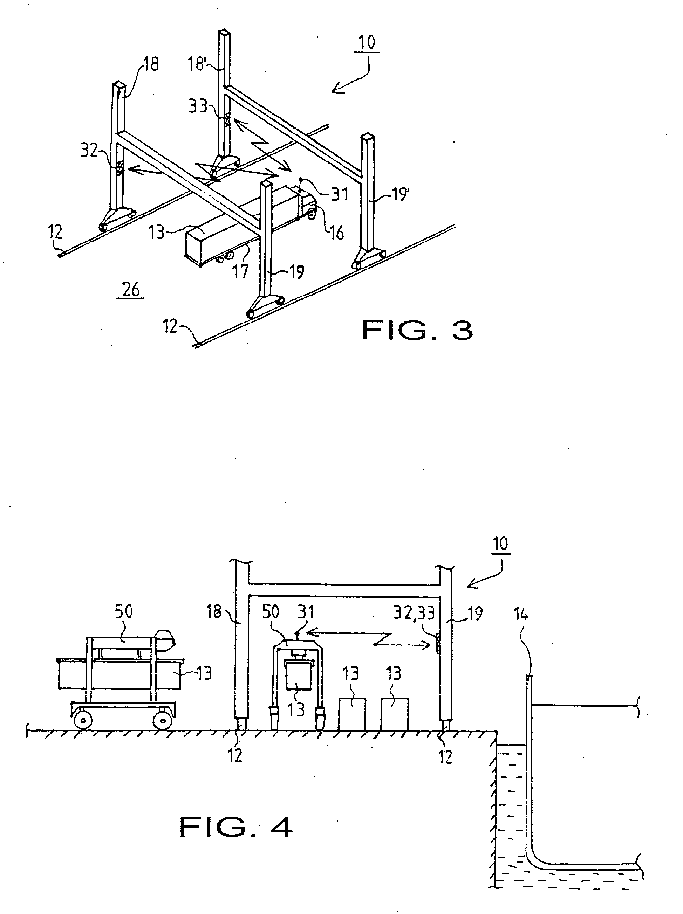

Figure 3 is a schematic perspective view of a part of the structure of container crane 10 according to Figure 1 and of a vehicle-trailer combination 16, 17 transporting a container 13. For moving the container 13 the vehicle-trailer combination 16, 17 is driven between the crane's 10 legs 18, 18', 19, 19' along one of the vehicle lanes 26 (in the case of container crane 10 there are several vehicle lanes 26 in parallel) and stopped under crane 10. With the aid of the positioning system according to the invention the vehicle-trailer combination 16, 17 can be stopped in the correct place for moving the container 13.

The positioning system comprises a computer-based calculating unit installed in vehicle 16 and in connection with the calculating unit a transmitter/receiver 31 operating at a high radio frequency. In an advantageous embodiment of the invention transmitter/receivers 32, 33 of a similar kind are also installed in crane 10, in Figure 3 in the crane's legs 18, 18', to communicate with the transmitter/receiver 31 installed in the vehicle. As the vehicle 16 is moving, the positioning system comprising a calculating unit and transmitter/receivers 31, 32, 33 measures and calculates exactly the distance between the transmitter/receivers 32, 33 in crane 10 and the transmitter/receiver 31 in vehicle 16 in order to determine the position of vehicle 16 and especially of the trailer 17 connected to it. Since there are several parallel vehicle lanes 26 under the crane 10 for vehicle-trailer combinations 16, 17, the calculating unit in vehicle 16 has received the necessary input information in advance in which vehicle lane 26 the vehicle 16 is located in order to determine an exact place where to stop. The calculating unit in vehicle 16 is capable of determining the right vehicle lane 26 by measuring and calculating the distances between the transmitter/receiver 31 in vehicle 16 and the transmitter/receivers 32, 33 in crane 10. When there is information on the vehicle lane 26, the exact place where to stop can be determined in a similar manner by measuring the distances between the transmitter/receivers 31, 32, 33.

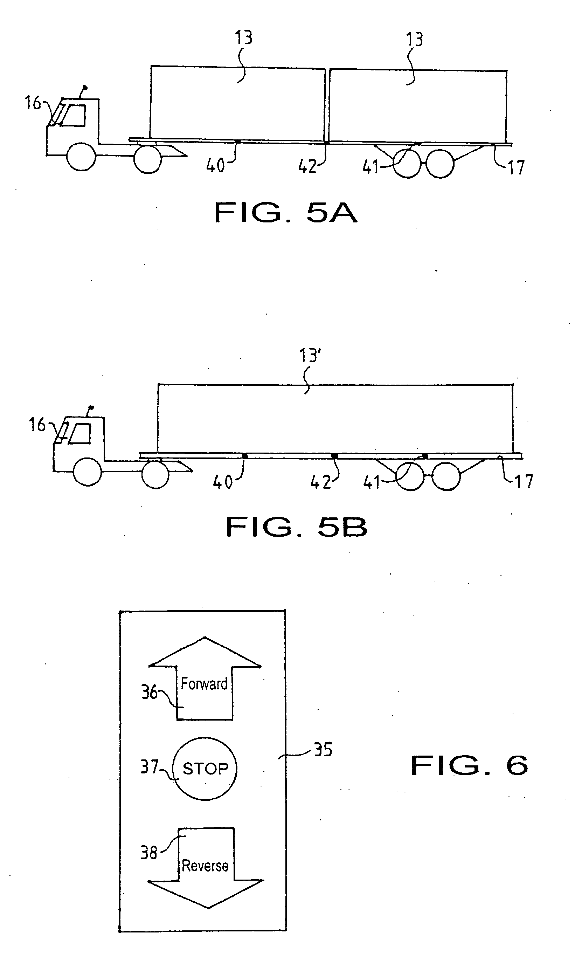

The vehicle also has a user interface 35 of the positioning system, which is intended for the driver of the vehicle and for his use and which is, for example, such as shown schematically in Figure 6. It may thus be a simple device, in which there are three indicating lights 36, 37, 38, that is, drive forward 36, stop 37, reverse 38. A calculating unit in the vehicle controls said indicating lights. In the user interface 35 there are also means, such as a push button or other such (not shown) for calibrating the correct place where to stop as well as possibly a signal sound indicating that the place where to stop is approached, which signal sound can be disconnected. The user interface 35 thus guides the driver with the aid of the lights 36, 37, 38 and tells him what he must do.

Since in ports and other such container areas and fields several different trailers 17 are used, which can be connected to a vehicle 16, it is important that each combination of vehicle and trailer in use or to be used is calibrated before the loading and unloading steps. For this reason each trailer 17 can be equipped with an identification mark, for example, with a mark based on the RFID technology, with a passive transponder etc. Correspondingly, the calculating unit installed in the vehicle 16 is provided with a wireless sensor, which at a close distance recognises the trailer 17 connected at each time to the vehicle 16. The calculating unit is programmed in advance with the dimensions characteristic of each trailer, which are thus taken into account in the positioning calculation and the positioning is done correctly. When a new trailer 17 is connected to the vehicle 16, calibration of the combination is performed. Calibration is performed by driving the combination formed by vehicle 16 and trailer 17 under the crane 10 a first time, and when the combination is in the right position, in which loading and unloading can be carried out, the position is calibrated with a calibration button of the user interface 35, whereby the correct position is stored in the memory of the calculating unit. Once calibration of the position has been done the positioning system will recognise the vehicle-trailer combination 16, 17 each time when the combination is driven under the crane 10.

However, a minor problem is associated with calibration. This is because more than one container size is used in the transportation of goods. Containers of 20' and 40' are the clearly most common container sizes in use. Thus, the positioning system must be made to recognise the right position for the trailer when loading containers of different sizes. Furthermore, when loading or unloading containers of 20', which can be loaded two after one another in the trailer 17, the positioning system must know whether the trailer's foremost or backmost container is being loaded. This is brought about simply by providing each container 17 with a mark marking the place for the container destined for it, for example, a mark 40, 41, 42 based on RFID technology, as is illustrated with the aid of Figures 5A and 5B. When the trailer 17 is intended for containers 13, 13' of 20' and 40', the trailer 17 must thus have three marks 40, 41, 42, which preferably mark the central points of the containers 13, 13' destined for the trailer 17. In the crane 10 itself, in connection with its container gripping device 23, there must hereby be a sensor, which detects the marks in the trailer 17 and indicates when the trailer is in the right place. In many cases port cranes can at the same time handle two containers of 20' located one after the other. If loading and unloading is done in this way by a container gripping device, the system must also know the correct position for the trailer in this case of "twin-lift". The common central point of two containers 13 of 20' is located with sufficient accuracy at the same spot where the central point of one container of 40' is located.

The positioning system for container handling equipment according to the invention can also be applied in such a combination, which comprises a travelling container gantry 50 and a container crane 10, as is presented with the aid of Figure 4. In a combination of this kind, the travelling container gantry 50 is used to move containers 13, for example, from a container field or from trailers 17 located farther away from the container crane 10 under the container crane 10 for loading into a vessel 14 (when unloading the vessel 14 this is of course the other way round). The user interface 35 is hereby located in the travelling container gantry 50 and the travelling container gantry is further provided with a mark, which indicates to the container crane 10 that the travelling container gantry is in the right position for lowering the container 13 to the ground under the container crane 10.

In the above description of the positioning system according to the invention it was noted that an advantageous embodiment of the invention comprises a transmitter/receiver 31 installed in the vehicle 16 and operating at a high radio frequency and transmitter/receivers 32, 33 of a similar kind are installed in the crane 10 to communicate with the transmitter/receiver 31 installed in the vehicle. This solution could possibly be replaced by a solution where the transmitter/receivers 32, 33 installed in the crane 10 are replaced by at least two reflectors (not shown), which can be recognized by a transmitter/receiver 31 located in the vehicle. However, the solution described earlier, where there are transmitter/receivers 31, 32, 33 both in the vehicle and in the crane, must be considered more reliable and more accurate than the reflector application.

The invention has been described above by way of example referring to the figures in the appended drawing. However, the invention is not intended to concern only the examples shown in the figures, but different forms of application of the invention may vary within the scope of the invention defined in the appended claims.

## Claims

1. Positioning system for positioning a container handling equipment (16, 17; 50) into a position determined by a crane (10, 10a) handling and moving containers (13, 13') in a vehicle lane (26, 26a) located under said crane (10, 10a), into which position the crane (10, 10a) will lower the container/containers (13, 13') it has moved and/or from which position the crane (10, 10a) will pick up the container/containers (13, 13a) brought by the container handling equipment (16, 17; 50) for further loading/storing elsewhere, which positioning system is a system based on the use of a radio frequency arranged by radio signals to constantly determine the position of the container handling equipment (16, 17; 50) in relation to the crane (10, 10a), **characterized in that**
a transmitter/receiver (31) sending and receiving a radio signal is installed and a calculating unit is located in the container handling equipment (16, 17; 50) said transmitter/receiver (31) and calculating unit being connected to each other and
in communication with the transmitter/receiver (31) in the container handling equipment (16, 17; 50) at least two reflectors (32, 33), which are arranged to receive and reflect back the radio signal transmitted by the transmitter/receiver (31) of the container handling equipment (16, 17; 50), or at least two transmitter/receivers (32, 33) of a similar kind and operating at the same frequency as the transmitter/receiver (31) of the container handling equipment (16, 17; 50) which are arranged to receive the radio signal sent by the transmitter/receiver (31) of the container handling equipment (16, 17; 50) and correspondingly to send a radio signal to the transmitter/receiver (31) of the container handling equipment (16, 17; 50) are installed in the crane (10, 10a),
so that based on the transmitted/received radio signals the calculating unit constantly calculates the distances between the transmitter/receiver (31) in the container handling equipment (16, 17; 50) and the two reflectors or transmitters/receivers (32, 33) located in the crane (10, 10a) and determines the location of the container handling equipment (16, 17; 50) while it is moving and the exact place where to stop in relation to the crane (10, 10a) for loading and/or unloading of containers (13, 13a).

2. Positioning system according to claim 1, **characterized in that** the positioning system further comprises a user interface (35) of the positioning system, which is installed in the container handling equipment (16, 17; 50) and is intended for use by the operator of the container handling equipment (16, 17; 50) and is connected to the calculating unit and which indicates to the operator the exact place where to stop and the right driving direction for reaching said exact place where to stop.

3. Positioning system according to claim 1 or 2, **characterized in that** the container handling equipment is a combination formed by a vehicle (16) and a trailer (17) or other such chassis, whereby the calculating unit of the container handling equipment (16, 17), the transmitter/receiver (31) transmitting and receiving a radio signal and the user interface (35) are installed in the vehicle (16) of the combination.

4. Positioning system according to claim 3, **characterized in that** to the vehicle (16) can be connected trailers (17) or other such chassis of different dimensions or types, whereby in order to calibrate each combination of vehicle (16) and trailer (17) or other such chassis, which is in use or to be in use at each time, each trailer (17) or other such chassis is provided with identifying marks and, correspondingly, the calculating unit installed in the vehicle (16) is provided with a wireless sensor for recognising at a close distance the trailer (17) or other such chassis connected at each time to the vehicle (16).

5. Positioning system according to claim 1 or 2, **characterized in that** the container handling equipment is a travelling container gantry (50), which is arranged to move containers (13, 13') under the crane (10, 10a) for further transfer by the crane or to transport containers (13, 13') moved by the crane (10, 10a) away from under the crane.

6. Positioning system according to any preceding claim, **characterized in that** the crane is a container crane (10) for use in a port or in some other such place for load handling.

7. Positioning system according to any of claims 1-5, **characterized in that** the crane is a travelling container gantry (10a) for use at a container terminal or correspondingly in a container field.

## Patentansprüche

1. Positioniersystem zum Positionieren einer Umschlagausrüstung für Container (16, 17; 50) in eine Position, die durch einen Kran (10, 10a) bestimmt wird, der Container (13, 13') in einer unter dem Kran (10, 10a) angeordneten Fahrzeugspur (26, 26a) befördert und bewegt, wobei der Kran (10, 10a) den/die Container (13, 13') in diese Position, in die er sich bewegt hat, absenken wird, und/oder der Kran (10, 10a) von dieser Position den/die durch die Umschlagausrüstung für Container (16, 17; 50) herbeigeschafften Container/Container (13, 13a) aufnehmen wird, um sie anderswo weiter zu befrachten/zu lagern, wobei das Positioniersystem ein System ist, das auf der Verwendung einer durch Funksignale eingerichteten Hochfrequenz basiert, um ständig die Position der Umschlagausrüstung für Container (16, 17; 50) im Verhältnis zu dem Kran (10, 10a) zu bestimmen, **dadurch gekennzeichnet, dass**
in der Umschlagausrüstung für Container (16, 17; 50) ein Sender/Empfänger (31), der ein Funksignal sendet und empfängt, eingebaut ist und eine Berechnungseinheit angeordnet ist, wobei Sender/Empfänger (31) und Berechnungseinheit miteinander verbunden sind, und
in dem Kran (10, 10a) mindestens zwei Reflektoren (32, 33) in Kommunikation mit dem Sender/Empfänger (31) in der Umschlagausrüstung für Container (16, 17; 50), die angebracht sind, um das durch den Sender/Empfänger (31) der Umschlagausrüstung für Container (16, 17; 50) übertragene Funksignal zu empfangen und zurück zu reflektieren, oder mindestens zwei Sender/Empfänger (32, 33) einer ähnlichen Art und auf der gleichen Frequenz wie der Sender/Empfänger (31) der Umschlagausrüstung für Container (16, 17; 50) arbeitend installiert sind, die angebracht sind, um das durch den Sender/Empfänger (31) der Umschlagausrüstung für Container (16, 17; 50) gesendete Funksignal zu empfangen und entsprechend ein Funksignal an den Sender/Empfänger (31) der Umschlagausrüstung für Container (16, 17; 50) zu senden,
so dass die Berechnungseinheit auf der Grundlage der gesendeten/empfangenen Funksignale ständig die Entfernungen zwischen dem Sender/Empfänger (31) in der Umschlagausrüstung für Container (16, 17; 50) und den zwei Reflektoren oder Sendern/Empfängern (32, 33), die in dem Kran (10, 10a) angeordnet sind, berechnet und den Standort der sich bewegenden Umschlagausrüstung für Container (16, 17; 50) sowie den genauen Ort bestimmt, wo im Verhältnis zu dem Kran (10, 10a) zum Beladen und/oder Entladen von Containern (13, 13a) anzuhalten ist.

2. Positioniersystem nach Anspruch 1, **dadurch gekennzeichnet, dass** das Positioniersystem des Weiteren eine Benutzerschnittstelle (35) des Positioniersystems umfasst, die in der Umschlagausrüstung für Container (16, 17; 50) eingebaut und zur Verwendung durch die Bedienperson der Umschlagausrüstung für Container (16, 17; 50) bestimmt ist und mit der Berechnungseinheit verbunden ist, und die der Bedienperson den genauen Ort, wo anzuhalten ist, und die richtige Fahrtrichtung zum Erreichen des genauen Ortes, wo anzuhalten ist, anzeigt.

3. Positioniersystem nach Anspruch 1 oder 2, **dadurch gekennzeichnet, dass** die Umschlagausrüstung für Container eine Kombination ist, die durch ein Fahrzeug (16) und einen Sattelauflieger (17) oder ein anderes solches Fahrgestell gebildet wird, wobei die Berechnungseinheit der Umschlagausrüstung für Container (16, 17), der ein Funksignal sendende und empfangende Sender/Empfänger (31) und die Benutzerschnittstelle (35) in dem Fahrzeug (16) der Kombination eingebaut sind.

4. Positioniersystem nach Anspruch 3, **dadurch gekennzeichnet, dass** mit dem Fahrzeug (16) Sattelauflieger (17) oder ein anderes solches Fahrgestell anderer Abmessungen oder Typen verbunden werden kann, wodurch jeder Sattelauflieger (17) oder ein anderes solches Fahrgestell mit Erkennungszeichen versehen ist, um jede Kombination von Fahrzeug (16) und Sattelauflieger (17) oder einem anderen solchen Fahrgestell, das jedes Mal in Gebrauch ist oder gebraucht wird, zu kalibrieren; und folglich die in dem Fahrzeug (16) eingebaute Berechnungseinheit mit einem Funksensor versehen ist, um den jedes Mal mit dem Fahrzeug (16) verbundenen Sattelauflieger (17) oder anderen solchen Fahrgestell in einer nahen Entfernung zu erkennen.

5. Positioniersystem nach Anspruch 1 oder 2, **dadurch gekennzeichnet, dass** die Umschlagausrüstung für Container ein sich hin- und herbewegender Container-Portalkran (50) ist, der zum Bewegen von Containern (13, 13') unter dem Kran (10, 10a) zur weiteren Umladung durch den Kran oder zum Transportieren von Containern (13, 13') eingerichtet ist, die durch den Kran (10, 10a) von unterhalb desselben wegbewegt werden.

6. Positioniersystem nach einem vorhergehenden Anspruch, **dadurch gekennzeichnet, dass** der Kran ein Containerkran (10) zur Verwendung in einem Hafen oder an irgendeinem anderen solchen Ort zum Ladungsumschlag ist.

7. Positioniersystem nach einem der Ansprüche 1 bis 5, **dadurch gekennzeichnet, dass** der Kran ein sich hin- und herbewegender Container-Portalkran (10a) zur Verwendung an einem Container-Terminal oder entsprechend in einem Containerfeld ist.

## Revendications

1. Système de positionnement destiné à positionner un équipement de manipulation de récipients (16, 17 ; 50) dans une position déterminée par un appareil de levage (10, 10a) qui manipule et déplace des récipients (13, 13') sur une voie de circulation pour véhicules (26, 26a) située sous ledit appareil de levage (10, 10a), dans laquelle position ledit appareil de levage (10, 10a) descend lesdits récipients (13, 13') qu'il a déplacé, et/ou à partir de laquelle position l'appareil de levage (10, 10a) saisit lesdits récipients (13, 13a) amenés par l'équipement de manipulation de récipients (16, 17 ; 50) de façon à les charger/les stocker ailleurs, ledit système de positionnement étant un système basé sur l'utilisation d'une fréquence radio assurée par des signaux radio afin de déterminer en permanence la position dudit équipement de manipulation de récipients (16, 17 ; 50) par rapport à l'appareil de levage (10, 10a), **caractérisé en ce que**
un émetteur/récepteur (31) qui envoie et reçoit un signal radio est installé, et une unité de calcul est située dans ledit équipement de manipulation de récipients (16, 17 ; 50), ledit émetteur/récepteur (31) et ladite unité de calcul étant reliés l'un à l'autre, et
en communication avec ledit émetteur/récepteur (31) au sein dudit équipement de manipulation de récipients (16, 17 ; 50), au moins deux réflecteurs (32, 33), qui sont prévus pour recevoir et renvoyer le signal radio transmis par ledit émetteur/récepteur (31) dudit équipement de manipulation de récipients (16, 17 ; 50), ou au moins deux émetteurs/récepteurs (32, 33) de type similaire et fonctionnant à la même fréquence que ledit émetteur/récepteur (31) dudit équipement de manipulation de récipients (16, 17 ; 50), qui sont prévus pour recevoir le signal radio envoyé par ledit émetteur/récepteur (31) dudit équipement de manipulation de récipients (16, 17 ; 50), et pour envoyer un signal radio audit émetteur/récepteur (31) dudit équipement de manipulation de récipients (16, 17 ; 50), sont installés dans l'appareil de levage (10, 10a),
afin que, sur la base des signaux radio transmis/reçus, l'unité de calcul calcule en permanence les distances entre ledit émetteur/récepteur (31) au sein dudit équipement de manipulation de récipients (16, 17 ; 50) et les deux réflecteurs ou émetteurs/récepteurs (32, 33) situés dans l'appareil de levage (10, 10a), et détermine l'emplacement dudit équipement de manipulation de récipients (16, 17 ; 50) pendant son déplacement, et l'endroit exact auquel il doit s'arrêter par rapport à l'appareil de levage (10, 10a) afin de charger et/ou de décharger les récipients (13, 13a).

2. Système de positionnement selon la revendication 1, **caractérisé en ce que** le système de posisitonnement comprend en outre une interface utilisateur (35) du système de positonnement, qui est installée dans ledit équipement de manipulation de récipients (16, 17 ; 50), est destinée à être utilisée par l'opérateur dudit équipement de manipulation de récipients (16, 17 ; 50), et est reliée à l'unité de calcul, et qui indique à l'opérateur l'endroit exact auquel il doit s'arrêter, ainsi que la direction correcte à prendre pour atteindre ledit endroit exact auquel s'arrêter.

3. Système de positionnement selon la revendication 1 ou 2, **caractérisé en ce que** ledit équipement de manipulation de récipients est une combinaison formée par un véhicule (16) et une remorque (17) ou tout autre châssis similaire, dans lequel l'unité de calcul dudit équipement de manipulation de récipients (16, 17), l'émetteur/récepteur (31) qui transmet et reçoit un signal radio, et l'interface utilisateur (35) sont installés dans le véhicule (16) de ladite combinaison.

4. Système de positionnement selon la revendication 3, **caractérisé en ce qu'**au véhicule (16) peuvent être reliées des remorques (17) ou tout autre châssis de différentes dimensions ou de différents types, et où, afin de calibrer chaque combinaison de véhicule (16) et de remorque (17) ou de tout autre châssis utilisée ou à utiliser à chaque fois, chaque remorque (17) ou autre châssis est muni(e) de marques d'identification et, de façon correspondante, l'unité de calcul installée dans le véhicule (16) est munie d'un capteur sans fil destiné à reconnaître, à une distance rapprochée, ladite remorque (17) ou tout autre châssis relié(e) à chaque instant audit véhicule (16).

5. Système de positionnement selon la revendication 1 ou 2, **caractérisé en ce que** le équipement de manipulation de récipients est un portique à récipients mobile (50), qui est prévu pour déplacer les récipients (13, 13') sous l'appareil de levage (10, 10a) afin de les transférer de nouveau à l'aide dudit appareil de levage, ou pour éloigner lesdits récipients (13, 13') déplacés par ledit appareil de levage (10, 10a) du dessous de l'appareil de levage.

6. Système de positionnement selon l'une quelconque des revendications précédentes, **caractérisé en ce que** l'appareil de levage est un appareil de levage à récipients (10) destiné à être utilisée dans un port ou tout autre lieu de manutention.

7. Système de positionnement selon l'une quelconque des revendications 1 à 5, **caractérisé en ce que** l'appareil de levage est un portique à récipients mobile (10a) destiné à être utilisé dans un terminal à récipients ou sur un site de stockage de récipients.
